# EUROPEAN PATENT SPECIFICATION

(11) **EP 0 708 429 B1**
(45) Date of publication and mention of the grant of the patent: **15.09.2004**
(21) Application number: 95116374.0
(22) Date of filing: 17.10.1995
(51) Int. Cl.: G09G 1/16, G09G 3/04

(54) **Storage control system for prohibiting rewriting in a determined storage area**
Speichersteuerungssystem zum Verhindern von Überschreiben in einem betimmten Speicherbereich
Système de commande de mémoire pour interdire la réecriture dans une région prédéterminée de la mémoire

(30) Priority: 19.10.1994 JP 25385294
(43) Date of publication of application: 24.04.1996
(73) Proprietor: NEC CORPORATION, Tokyo (JP); NEC Electronics Corporation, Kawasaki, Kanagawa 211-8668 (JP)
(72) Inventor: Tanaka, Mizue, c/o NEC IC Microcomputer Sys., Ltd., Kawasaki-shi, Kanagawa (JP)
(74) Representative: Glawe, Delfs, Moll & Partner

(56) References cited:
- EP-A- 0 150 453
- EP-A- 0 278 526
- FR-A- 2 628 555
- PATENT ABSTRACTS OF JAPAN vol. 12 no. 291 (E-644) ,9 August 1988 & JP-A-63 067867 (FUJI XEROX CO. LTD.) 26 March 1988,

## Description

The present invention relates to storage control systems for storing data and, more particularly, to storage control system and method for efficiency processing the display data.

In storage control systems for displaying the data on fluorescent display panels, there is a trend for increasing amount of display data to be processed with increasing complication of the display, and also there is a trend for increasing frequency of the display data re-writing in order to realize a large variety of displays.

Meanwhile, in the time-division drive display, data that are always re-written such as segment data and data that are not re-written after initially setting the time-division drive data determined by the fluorescent display panel such as digit data, may be present as the display data in the same address memory, and writing control in given bit units may be necessary.

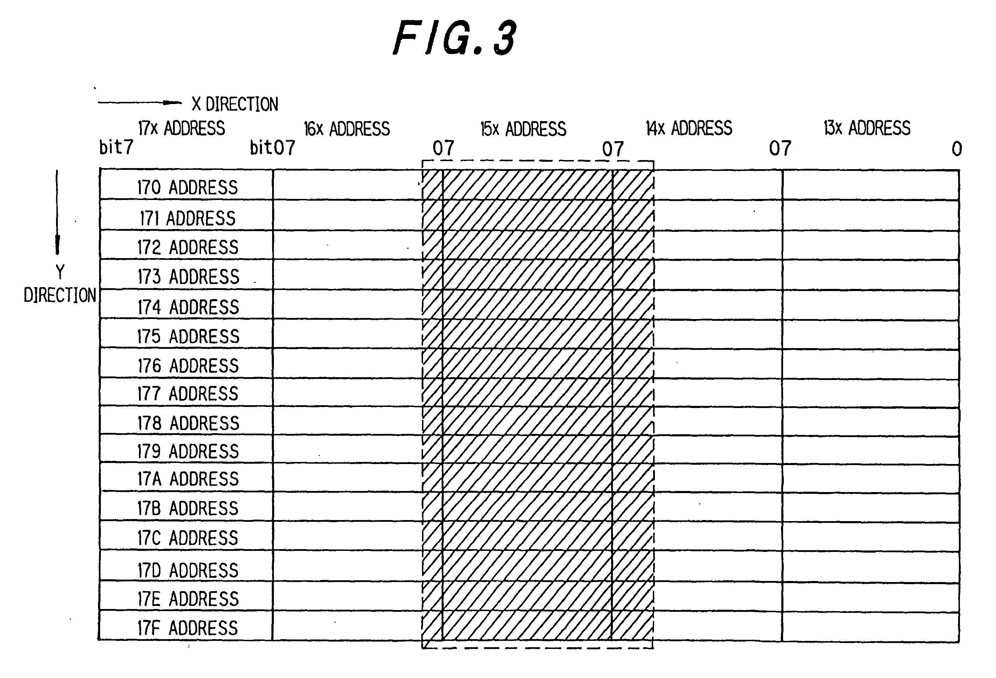

Fig. 3 is a map view of a display memory having areas of addresses 130 to 17F and capable of accessing 8 bits for each address and displaying data of 5 addresses as a unit.

The shaded area is a digit data storage area which does not require re-writing of the data for the use of the display memory, that is, it is a write prohibit area. The area on the left side of the shaded area is a segment data storage area for the display data output, that is, a write permit area requiring re-writing of data.

As prior art example 1, a storage control system will now be described, in which software logic operations are performed for re-writing the data. First, a check is made as to whether an externally supplied address is one in which a write permit area or a write prohibit area is present. If the result of check when the write prohibit area is present in that address is "right", in case when the address contains bits that are not re-written, that is, in order to hold the bit data to be masked, data in which only bits not to be re-written and hence masked are held is obtained by logically ANDing the data in which only write permit data is cleared to "0" among the read-out data and the data having initially been stored in the corresponding address. Then, the write data and the data in which write prohibit bits are cleared to "0" are logically ANDed to obtain the data in which only write permit bits are made effective. Subsequently, a logical OR operation is executed with the read-out data in which only bits to be masked are held, thus effecting the re-writing of the sole effective bits for the address.

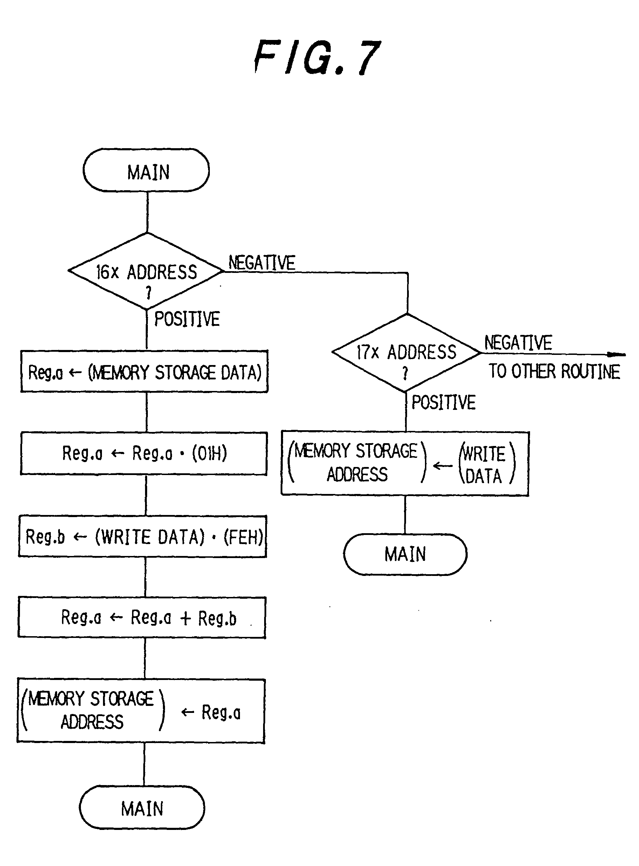

Fig. 7 shows a flow chart of operation wherein data "01010001B" (B being indicative of binary data) is stored in address No. 165 of the display memory shown in Fig. 3, access address No. 165 and write data "11101000B" is externally supplied. In address No. 165, 0-th bit is a digit data area, i.e., write prohibit area.

A check is first made as to whether the externally supplied address is address No. 16X in which 0-th bit is a write prohibit area. Since the check result is "right", the data "01010001B" in address No. 165 is read out and logically ANDed with the data "00000001B" to hold the 0-th bit data. Then, the write data "11101000B" and "11111110B" are logically ANDed, and the write data "11101000B" in which 7-th to 1-st bits are effective data and the read-out data "00000001B" in which only the 0-th bit is held are logically ORed. The result data "11101001B" is written in the address No. 165 of the display memory.

Now, a case will be considered, in which the data "11010110B" is stored in address 16A of the display memory in Fig. 3, and address No. 16A as access address and the write data "01010101B" are supplied externally. The address No. 16A, like the address No. 165, is a write prohibit area.

First, a check is made as to whether address No. 16X is externally supplied as an address in which 0-th bit is a write prohibit area. Since the check result is "right", the data "11010110B" in address No. 16A is read out from the display memory for logical ANDing with the data "0000001B" to hold the 0-th bit data.

Then, the write data "01010101B" and "11111110B" are logically ANDed, and the write data "01010100B" in which 7-th to 1-st bits are effective data and the read-out data "00000000B" in which only 0-th bit is held are logically ORed. The result data "01010100B" is written in address No. 16A of the display memory.

In this prior art example, one re-writing of a segment data group in write permit area, i.e., an area of 7-th to 1-st bits of addresses No. 17X and No. 16X in the Fig. 3 example, requires about 220 steps. Usually, for display n times segment data group re-writing requires about 220xn program steps, leading to extreme reduction of the ROM efficiency and program processing efficiency. Further, software developers always have to set the mask data in software in advance by taking bits to be masked into considerations.

Now, as prior art example 2, storage control of "Data storage system having registers with mask data stored therein" disclosed in Japanese Patent Laid-Open Publication Showa 63-8951 will be described. In this example 2, the software process is implemented with hardware.

Heretofore, where a write permit area and a write prohibit area are present on a display memory, it has been in practice to prepare registers for setting mask data in access units of the display memory in a number corresponding to the bit width of the display memory access unit, select among these registers a register with mask data corresponding to the address to be accessed, make operations on the mask data that has been set by the selected register and the write data using the selected register and write the result of operations in the display memory.

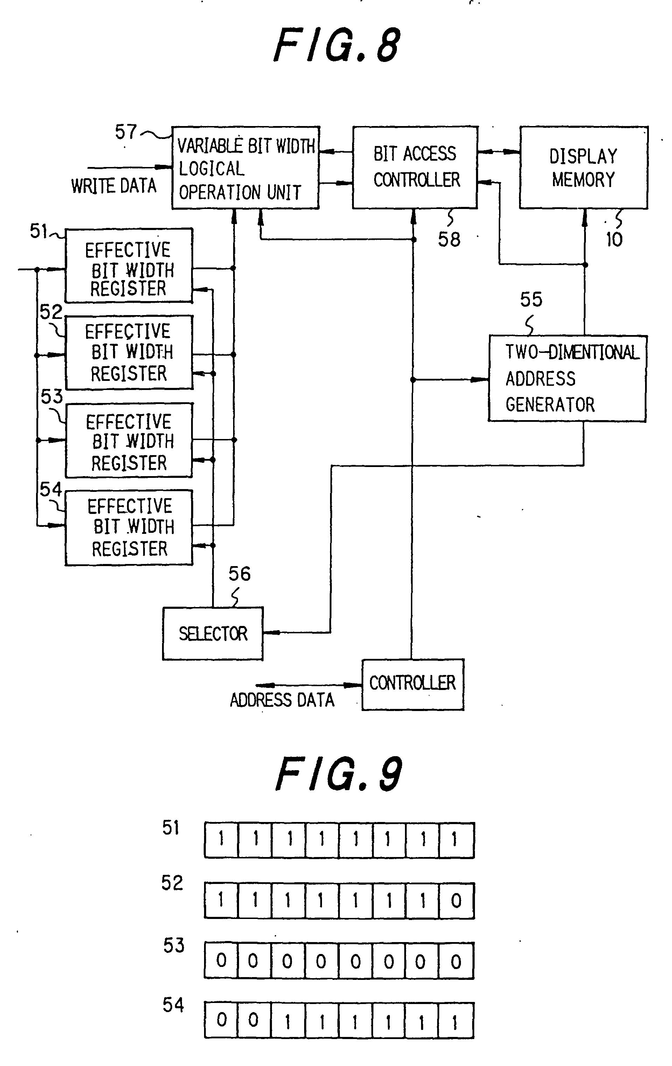

Fig. 8 is a block diagram showing a data storage system having a plurality of registers for storing mask data corresponding to the display memory access unit bit width. In this example, a display memory 10 is accessed in units of 8 bits, and display data is stored in this memory. Effective bit width registers 51 to 54 are 8-bit registers, in which mask data corresponding to the access unit (i.e., 8 bits) of the display memory 10 is stored.

Fig. 9 shows fixed data in the effective bit width registers 51 to 53 when realizing a mask example of data in the display memory 10 shown in Fig. 3. Bit "1" is re-writable bit, and bit "0" is bit to be masked. A two-dimensional address generator 55 designates an address range of an area in the display memory 10, to which the master data of the effective bit width designation registers 51 to 54 are designated. When an access address of the display memory 10 is in a range that is set by the two-dimensional address generator 55, the effective bit width registers 51 to 54 are selected via a selector 56. A variable bit width logical operation unit 57 performs operations on externally supplied write data, the mask data from the selected effective bit width register and the data stored in the re-write subject address of the display memory 10 which is as read out by a bit access control unit 58. The result of operations is stored in the re-write subject address of the display memory 10 via the bit access control unit 56.

Operation will now be described in connection with an example, in which the data "01010001B" is stored in address No. 165 of the display memory in Fig. 3 as explained in the prior art example 1. When the data "11101000B" is externally supplied as the write data to address No. 165, the two-dimensional address generator 55 and selector 56 select the effective bit width register 52, in which master data corresponding to the address No. 165 is stored, and the mask data "11111110B" is supplied to the variable bit width logic operation unit 57. In the variable bit width logic operation unit 57 externally supplied write data "11101000B" and the mask data "11111110B" are logically ANDed. The 0-th bit of the external write data is thus nullified, thus providing data "11101000B". The variable bit width logic operation unit 57 is supplied with the data "01010001B" in address No. 165 of the display memory 10 via the bit access control unit 58 and executes a logical AND operation of this data "01010001B" and the data "00000001B" as inversion data of the mask data from the effective bit width register 52. The result of operation is "00000001B", and the value of the 0-th bit in the address No. 165 of the display memory 10 is held.

In the above way, the external write data having been bit operated is logically ORed with the logically ANDed result of the data "00000001B" as the inversion data of the mask data from the effective bit width register 52 and the data "01010001B" in the address No. 165 of the display memory 10. Thus, the write mask processed data "11101001B" is written in the address No. 165 of the display memory 10. In the storage control in the prior art data storage system as shown, it is required to provide a selector which serves to select registers for setting the mask data in access units of the display memory according to a number of the access unit bit width of the display memory 10 and also select an access unit width register in correspondence to the select address.

For example, after the data that is always re-written such as fluorescent display panel display segment data and the time-division drive data determined by the fluorescent display panel such as the digit data have been initially set, if the write control in given bit units is necessary with the presence in the same address of memory of data that is not re-written, according to the data storage system as shown in Fig. 8 effective bit width registers for storing display memory access unit mask data are necessary in a number corresponding to the display memory access unit bit number, and this means an increase of number of the elements.

Further, the variable bit width logic operation unit 57 performs operations on three different data, i.e., externally supplied write data, the mask data from the selected effective bit width register and the data stored in a re-write subject address of the display memory 10 as read out by the bit access control unit 58. Therefore, the variable bit width logic operation unit is complicated in circuit construction, the number of overall elements is increased, and the chip size is increased. Further, it has been necessary to store the result of operations in the variable bit width logic operation unit 57 in a re-write subject address of the display memory 10 via the bit access control unit 58, thus requiring time for the data write process.

A further prior art example is known from EP-A-278526. EP-A-278526 describes a storage control system having a memory and a memory access unit. This system comprises means for holding data to designate an area; means for comparing a memory address and said data; and means for prohibiting writing of data and memory elements corresponding to the area non requiring prewriting of stored contents. By these means it is possible to define a write enable area.

Since this prior art document does not disclose means for holding the width of mask non-rewritable areas this system has the same drawbacks as the other prior art systems.

These drawbacks are overcome by the features of claim 1.

The sub-claims show advantageous embodiments of the invention.

Other objects and features will be clarified from the following description with reference to attached drawings.

### BRIEF DESCRIPTION OF THE DRAWINGS

Fig. 1 is a block diagram showing a first embodiment of the storage control system according to the present invention;
Fig. 2 is a block diagram of the data storage system according to second embodiment of present invention;
Fig. 3 is a map view of a display memory according to the prior art and the present invention;
Fig. 4 shows an example of address map of the display data storage in the display memory according to the second embodiment;
Fig. 5 is a flow chart of the operation of the write judgment/designation signal generator;
Fig. 6 shows flow charts of the operations of the storage control system according to the first and second embodiments;
Fig. 7 shows a flow chart of the operation according to the prior art system;
Fig. 8 is a block diagram showing a data storage system having a plurality of registers for storing mask data corresponding to the display memory access unit bit width; and
Fig. 9 shows fixed data in the effective bit width registers 51 to 53 when realizing a mask example of data in the display memory 10 shown in Fig. 3.

### PREFERRED EMBODIMENTS OF THE INVENTION

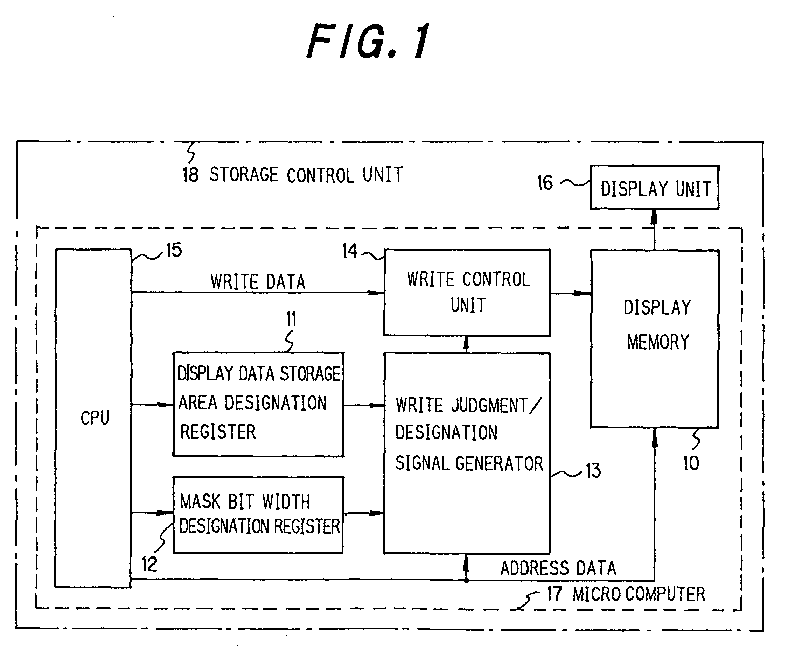

Preferred embodiments of the present invention will now be described with reference to the drawings. Fig. 1 is a block diagram showing a first embodiment of the storage control system according to the present invention.

Individual components of the system will now be described. A display memory 10 has a write permit area and a write prohibit area. Data is written in and read out from the supplied address of the display memory in response to an externally supplied address. Fig. 3 shows the memory map of the display memory 10. As shown, the memory has areas of addresses No. 130 to No. 17F. Each address is capable of 8-bit accessing, and data of five addresses can be displayed as one unit data.

This embodiment is a storage control system 18 comprising a display unit 16 and a microcomputer 17. The display unit 16 can display a maximum of 40 bits. Display bit width designation data is the output from a CPU 15 of the microcomputer 17 to be input to a display data storage area designation register 11 thereof. The display data storage area designation register 11 designates the X direction display bit width of display data stored in the display memory 10. Mask bit width designation data is output from the CPU 15 of the microcomputer 17 to be input to a mask bit width designation register 12. The mask bit width designation register 12 designates the mask bit width of data to be masked, i.e., data that is not re-written among the display bit widths designated by the display data storage area designation register 11.

The display data storage area designation register 11 and mask bit width designation register 12 designate X direction bit widths on the map of the display memory 10. The CPU 15 outputs address data for designating X and Y direction addresses. A write judgment/designation signal generator 13 receives the output of the display data storage area designation register 11, the output of the mask bit width designation register 12 and the address data from the CPU 15 and generates a signal necessary for a write control unit 14.

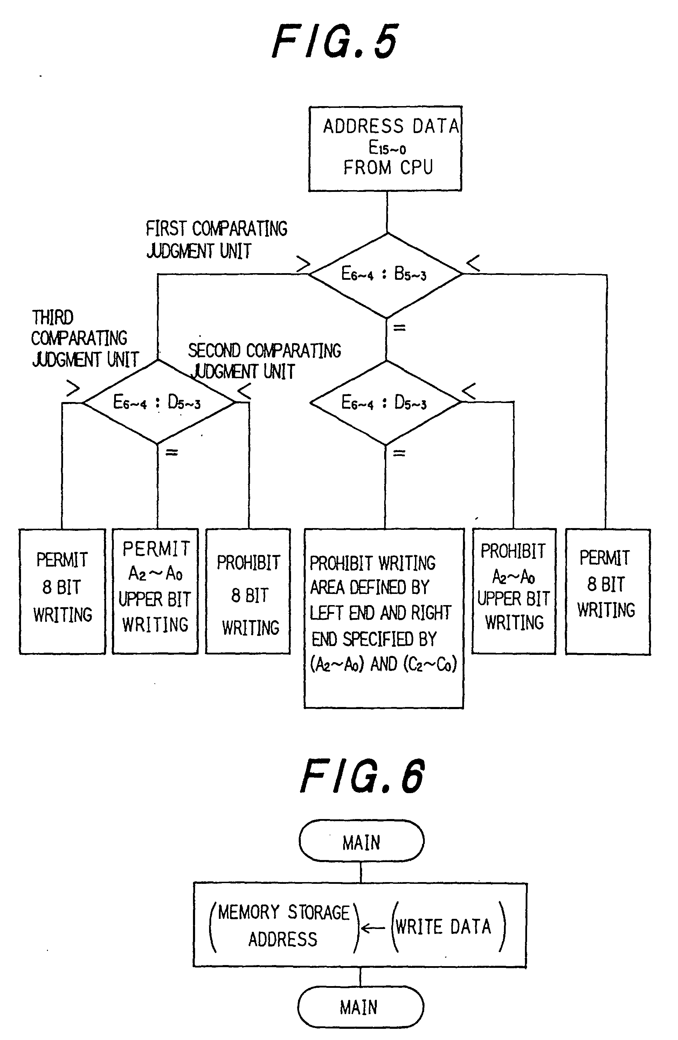

Now, the operation of the write judgment/designation signal generator will be described with reference to the flow chart of Fig. 5. Of the data that are set in the display data storage designation register 11, the data of the upper three bits, i.e., the 5-th to 3-rd bits, is denoted by A5 to A3, and the data of the lower three bits, i.e., the 2-nd to 0-th bits, are denoted by A2 to A0. Of the data that are set in the mask bit width designation register 12, the data of the upper three bits, i.e., the 5-th to 3-rd bits, are denoted by C5 to C3, and the data of the lower three bits, i.e., the 2-nd to 0-th bits, are denoted by C2 to C0. When the uppermost address of the address area of the display memory 10 is designated by a binary number, the data as a result of subtraction of data C5 to C3 from the 6-th to 4-th data, are denoted by D5 to D3. As address the data expressed as binary data from the CPU 15, the 6-th to 4-th data, which are address data in the X direction of the display memory 10, are denoted by E6 to E4.

First, a first comparator compares data E6 to E4 with data B5 to B3. If E6 to E4 < B5-B3, the pertinent address contains no boundary between a write prohibit area and a write permit area, so that 8-bit data can be re-written.

If the two data compared by the first comparator are the same, a second comparator compares data E6 to E4 with D5 to D3. If E6 to E4 < D5 to D3, the pertinent address contains the boundary between the write prohibit area and the write permit area, and it is prohibited to write upper bits of the bits designated by data A2 to A0. If the two data compared by the second comparator are the same, the pertinent address contains the right end boundary and left end boundary of the write prohibit area and the write permit area. In this case, the right end boundary is designated by A2 to A0, and the left end boundary by C2 to C0.

Subsequently, the first comparator compares the data E6 to E4 with the data E5 to E3. If E6 to E4 < B5 to B3, a third comparator compares the data E6 to E4 with the D5 to D3. If E6 to E4 < D5 to D3, the pertinent address contains no boundary between the write prohibit area and the write permit area, so that it is prohibited to re-write 8-bit data.

Further, the two data compared by the third comparator are the same, the pertinent address contains the boundary between the write prohibit area and the write permit area, and it is possible to re-write upper bits of the bits designated by data C2 to C0. The third comparator further compares data E6 to E4 with data D5 to D3. If E6 to E4 < B5 to B3, the pertinent address contains no boundary between the write prohibit area and the write permit area, so that it is possible to re-write 8-bit data.

As is seen from the above operation, with the determination of the opposite ends of the write prohibit area in the display memory 10, four different states of address are defined, i.e., an address in which all the bits are in a write permit area, an address in which upper n bits are in a write permit area and lower (8-n) bits are in a write prohibit area, an address in which all the bits are in a write prohibit area, and an address, in which upper m bits are in a write prohibit area and lower (8-n) bits are in a write permit area.

Further, the write judgment/designation signal generator 13 determines the address in either of the above four data mask states that corresponds to address data supplied from the CPU 15 and generates a write permit signal and a write prohibit signal with respect to the bit unit corresponding to that address.

A write control unit 14 writes only effective bits of the write data from the CPU 15 in the display memory 10 according to the write permit signal and write prohibit signal with respect to the bit unit generated from the write judgment/designation signal generator 13.

Now, an operation for the re-writing of the display data in an example of the display data storage shown in Fig. 3. It is assumed that data "01010001B" is stored in address No. 165 of the display memory 10.

First, an employed bit width of "26 bits" is set in the display data storage area designation register 11, and a mask bit width of "1 bit" is set in the mask bit width designation register 12. The used bit width from the address No. 17X side is determined by the data set in the display data storage area designation register 11, that is, the write judgment/designation signal generator 13 determines that the right end of the write prohibit area is the position of the 6-th bit in address No. 14X which is the fourth byte from the address No. 17X side of the display memory 10, and determines, by calculating "15 bits" from the difference between "26 bits" that are data set in the display data storage area designation register 11 and "11 bits" that are data set in the mask bit width designation register 11, that the left end of the write prohibit area is the position of the 0-th bit in address No. 16X which is the second byte from the address No. 17X of the display memory 10. This means that the write prohibit area ranges from the 0-th bit of address No. 16X to the 6-th bit of address No. 14X.

Thus, in addresses No. 17X and No. 13X all the bits are in a write permit area, in address No. 16X the 7th to 1-st bits are in a write permit area and the 0-th bit is in a write prohibit area, in address No. 15X all the bits are in a write prohibit area, and in address No. 14X the 7-th and 6-th bits are in a write prohibit area and the 5-th to 0-th bits are in a write permit area.

When the CPU 15 provides the write data "11101000B" to address No. 165, in which the 7-th to 1-st bits are in a write permit area and the 0-th bit is a write prohibit area, the write judgment/designation signal generator 13 provides a write permit signal of the 7-th to 1-st bits of the address No. 165 and a write prohibit signal of the 0-bit of that address, and the 7-th to 1-st bits are written as data "1110100XB" (X being indicative of write prohibit) in the display memory 10. As the 0-th bit data "1B" before the re-writing is held, and the data in the address No. 165 after the re-writing is "111010001B".

Likewise, when the CPU 15 provides the write data "100101110" to address No. 179, in which all the bits are in a write permit area, the write judgment/designation signal generator 13 provides a write permit signal of 7-th to 0-th bits to the write control unit 14, and the data "100010110B" is written in the address No. 170 of the display memory 10.

In address No. 153 all the bits are in a write prohibit area. Thus, the write designation signal generator 13 provides a write prohibit signal of the 7-th 0-th bits to the write control unit 14, so that the data in the address No. 153 is held as such without any writing.

While the above first embodiment has the display data storage area register 11, this register is unnecessary in case where the entire display memory 10 is constituted by a display data storage area. That is, in this case the sole mask bit width designation register 12 suffices.

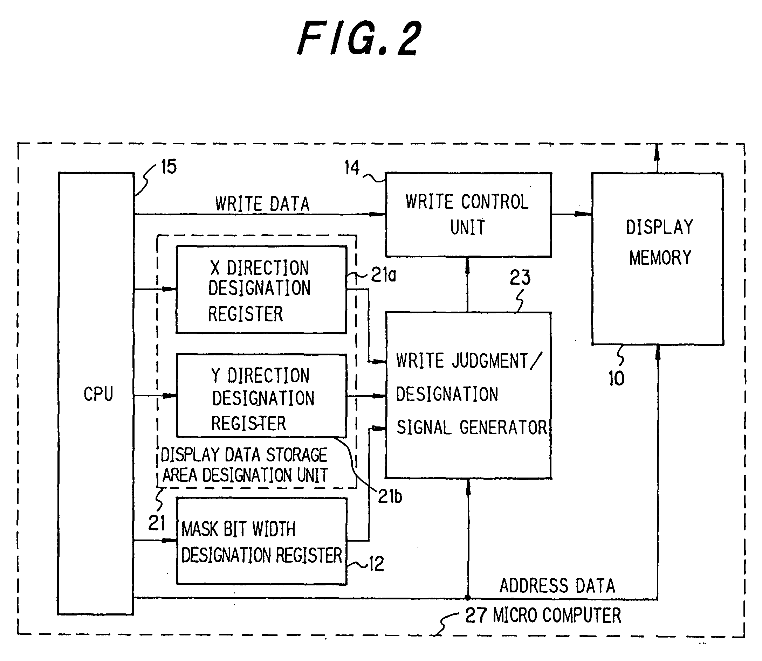

Now, a second embodiment will be described with reference to Fig. 2 showing block diagram of the data storage system according to the second embodiment. The second embodiment is different from the first embodiment in the display data storage area designation means. More specifically, the display data storage area designation register is constituted by two registers, i.e., an X direction designation register 21a for showing X direction storage area, and a Y direction designation register 21b for showing Y direction storage area.

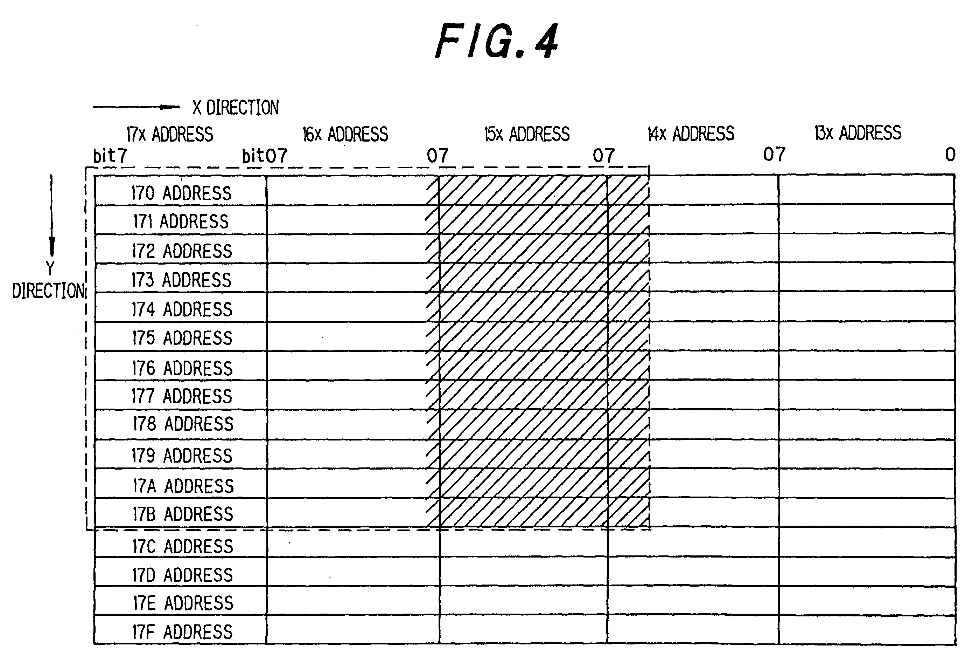

Fig. 4 shows an example of address map of and display data storage in the display memory 10. Enclosed by the broken line rectangle is a display data storage area, and shown shaded is a digit data storage area, i.e., a write prohibit area in which there is no need of re-writing data in the use of the display memory. As shown in Fig. 4, the display memory 10 has areas of addresses No. 130 to No. 17F. Each address is capable of 8-bit accessing, and data of 5 addresses can be displayed as unit data. This embodiment is a display memory which is capable of displaying a maximum of 40 bits.

An operation of realizing display data re-writing in the Fig. 4 display data storage example will now be described.

First, by setting "26 bits" as bits of use in X direction in the X direction designation register 21a of the display data storage area designation unit, the X direction in the display data storage area of the display memory 10 are from the 7-bit in address No. 17X to the 6-th bit in address No. 14X, and by setting "12 lines" as lines of use in the Y direction of the Y direction designation register 21b, the Y direction bits in the display data storage area of the display memory 10 are from address No. 1X0 to address No. 1XB. The data in these two registers 21a and 21b define a display data storage area as shown enclosed by the broken line rectangle as shown in Fig. 4.

By subsequently setting "11 bits" as mask bit width in the mask bit width designation register 12, the X direction data mask area in the display data storage area is from the 11-th bit from the lower side, i.e., the 6-th bit in address 14X to the 0-bit in address No. 16X. At this time, the display data storage area is up to address 1XB in the Y direction, and this means that the shaded area as shown in Fig. 4 is the write prohibit area in this embodiment.

It is now assumed that the data "01010001B" is stored in address 165 of the display memory 10. When the CPU 15 provides write data "11101000B" to address No. 165, in which the 7-th to 1-st bits are in a write permit area and the 0-th bit is in a write prohibit area, the write designation signal generator 23 provides a write permit signal of the 7-th to 1-st bits in the address No. 165 to write control unit 14, and the 7-th to 1-st bits are written as data "111010100XB" (X being indicative of write prohibit). Since the 0-th bit is held to be "1B", i.e., data before re-writing, the data in the address No. 165 after re-writing is "11101001B".

When the CPU 15 provides the write data "01000011B" to address No. 16C, in which all the bits are in a write permit area, the write judgment/designation signal generator 23 provides a write permit signal of 7-th to 0-th bits to the write control unit 14, and the data "01000011B" is written in the address No. 16C of the display memory 10. Likewise, when the CPU 15 provides the write data "10010110B" to address No. 179, in which all the bits are in a write permit area, the write judgment/designation signal generator 23 provides a write permit signal of the 7-th to 0-th bits to the write control unit 14, and data "10010110B" is written in the address No. 179 of the display memory 10.

When the CPU 15 provides the write data 01011010B" to address No. 153, in which all the bits are in a write prohibit area, the write judgment/designation signal generator 23 provides a write prohibit signal of the 7-th to 0-th bits to the write control unit 14, and the data in the address No. 153 is held without writing of any data.

Likewise, when the CPU 15 provides the write data "11010111B" to address No. 15E, in which all the bits are in a write permit area, the write judgment/designation signal of the 7-th to 0-th is provided to the write control unit 14, data "11010111B" to the address No. 15E of the display memory 10.

While this embodiment has been described by using display memory and display data, this is by no means limitative, and the embodiment is of course a useful technique in data write/read control of the storage system as well.

For instance, in case where write control is necessary in given bit units with non-re-write data in the same address of memory after the setting of data that is always re-written such as fluorescent display panel display segment data and time division drive data that are determined by the display panel like digit data, in the data storage system as shown in Fig. 8 effective bit width registers for storing access unit mask data in the display memory have been necessary in an number corresponding to the bit width of the display memory access unit. In the first embodiment it is possible to reduce the number of registers from 40 to 12 by allowing re-writing of data in the display storage area designation register 11 and the mask bit width designation register 12.

Further, the prior art data storage system described before the variable bit width logic operation unit 57 performs operations on three different data, i.e., the externally supplied write data, mask data from the selected effective bit width register, and data stored in a re-write subject address of the display memory 10 as read out by the bit access control unit 58. Therefore, the circuit construction of the variable bit width logic operation unit has been complicated, thus leading to increase of the number of the overall elements. However, with the construction of the write judgment/designation signal generator which operates in the manner as shown in Fig. 5, the circuit construction is simplified, so that it is possible to reduce the number of elements.

In the data storage system the result of operation in the variable bit width logic operation unit 57 is stored in the re-write subject address of the display memory 10 via the bit access control unit 58, thus requiring considerable time in the data re-write process. According to the present invention, the circuit is simplified, and also the data process is simplified, so that it is possible to reduce time for the data re-writing.

Unlike the operation of Fig. 7 of the prior art data storage system for mask control with software, the Fig. 6 flow of the first and second embodiments of the storage control system can be realized by one step, and thus it is of course possible to increase the process speed.

## Claims

1. A storage control system for a display memory (10) having a memory element array and a memory access unit for accessing the display memory (10) in units having each a width of a predetermined number of bits, such number of bits being more than one, **characterized in that**
said storage control system comprises:
first holding means (11, 21) for holding data designating a display data storage area of the display memory (10) where data are stored;
second holding means (12) for holding data designating the width of a write prohibit area of the memory whose contents are masked and non-rewritable, such second holding means being arranged for designating said width in terms of number of bits irrespectively of whether a border of such write prohibit area coincides with a memory unit boundary or not;
comparing means (13, 23) for comparing a supplied memory address and data of said first and second holding means; and
prohibiting means (14) for prohibiting writing of data in a memory element in the write prohibit area when the result of comparison in the comparing means (13, 23) indicates that at least part of the write prohibit area is contained in the bit width of the unit designated by the supplied memory address.

2. Storage control system according to claim 1, arranged for writing data in a write permit area, such write permit area being the portion of the display data storage area other than the write prohibit area, and for reading data out of the display memory (10) in response to an externally supplied address wherein:
said first holding means (11, 21) comprises a first display data storage area designation register (21a) arranged for designating the width of display data stored in the display memory (10), in response to display bit width designation data;
said second holding means (12) comprises a mask bit width designation register arranged for designating the width of data to be masked, i.e. data that is not rewritten in the width of the display data designated by the first display data storage area designation register, in response to mask bit width designation data,
said first display data storage area designation register and mask bit width designation register (12) designating widths in X direction in terms of number of bits on the map of the display memory (10);
said comparing means (13, 23) comprise a write judgement/designation signal generator (13, 23) for determining the opposite ends of the write prohibit area in the display memory to define four different states of address, a state of address in which all the bits are in the write permit area, a state of address in which predetermined upper bits are in the write permit area and predetermined lower bits in the write prohibit area, a state of address in which all the bits are in the write prohibit area, and a state of address in which predetermined upper bits are in the write prohibit area and predetermined lower bits are in the write permit area, determining the state of address in either of the four address states that corresponds to supplied address data, and generating a write permit signal and a write prohibit signal with respect to the bit unit corresponding to the supplied address data; and
said prohibiting means (14) comprises a write control unit for writing only permitted bits of the write data in the display memory (10) according to the write permit signal and write prohibit signal supplied from the write judgement/designation signal generator with respect to the bit unit corresponding to the supplied address data.

3. Storage control system according to claim 2 wherein:
said first holding means (21) comprises a second display data storage area designation register (21b) for designating the width in Y direction of display data stored in the display memory (10), in response to display bit with designation data.

## Patentansprüche

1. Speichersteuerungssystem für einen Anzeigespeicher (10) mit einem Speicherelementarray und einer Speicherzugriffseinheit zum Zugreifen auf den Anzeigespeicher (10) in Einheiten, die jeweils die Breite einer vorbestimmten Anzahl von Bits haben, wobei eine derartige Anzahl von Bits mehr als eins ist,
**dadurch gekennzeichnet, dass**
das Speichersteuerungssystem aufweist:
erste Haltemittel (11, 21) zum Halten von Daten, die einen Anzeigedatenspeicherbereich des Anzeigespeichers (10), wo Daten gespeichert werden, bezeichnen;
zweite Haltemittel (12) zum Halten von Daten, die die Breite eines Schreibsperrbereiches des Speichers bezeichnen, dessen Inhalte maskiert und nicht wieder beschreibbar sind, wobei solche zweiten Haltemittel für das Bezeichnen der Breite in Termen der Anzahl von Bits angeordnet sind, ungeachtet dessen, ob eine Grenze eines derartigen Schreibsperrbereiches mit einer Speichereinheitsgrenze übereinstimmt oder nicht;
Vergleichmittel (13, 23) zum Vergleichen von einer zugeführten Speicheradresse und Daten der ersten und zweiten Haltemittel; und
Untersagungsmittel (14) zum Untersagen des Einschreibens von Daten in ein Speicherelement in dem Schreibsperrbereich, wenn das Ergebnis des Vergleichs in den Vergleichmitteln (13, 23) angibt, dass wenigstens ein Teil des Schreibsperrbereiches in der Bitbreite der Einheit enthalten ist, die durch die zugeführte Speicheradresse bezeichnet ist.

2. Speichersteuerungssystem nach Anspruch 1, zum Einschreiben von Daten in einen Schreibzulässigkeitsbereich, wobei ein derartiger Schreibzulässigkeitsbereich der andere Teil als der Schreibsperrbereich des Anzeigedatenspeicherbereiches ist, und zum Lesen von Daten aus dem Anzeigespeicher (10) in Antwort auf eine extern zugeführte Adresse, wobei:
die ersten Haltemittel (11, 21) ein erstes Anzeigedatenspeicherbereichs-Bezeichnungsregister (21 a) aufweisen, das zum Bezeichnen der Breite der Anzeigedaten, die in dem Anzeigespeicher (10) gespeichert sind, in Antwort auf die Anzeigebitbreiten-Bezeichnungsdaten, angeordnet ist;
das zweite Haltemittel (12) ein Maskenbitbreite-Bezeichnungsregister aufweist, das zum Bezeichnen der Breite der zu maskierenden Daten angeordnet ist, d.h. der Daten, die nicht in der Breite der Anzeigedaten, die durch das erste Anzeigedatenspeicherbereichs-Bezeichnungsregister bezeichnet worden sind, in Antwort auf das Maskenbitbreite-Bezeichnungsdatum nicht überschrieben werden,
wobei das erste Anzeigedatenspeicherbereichs-Bezeichnungsregister und Maskenbitbreite-Bezeichnungsregister (12) Breiten in der X-Richtung in Termen der Anzahl von Bits auf der Karte des Anzeigespeichers (10) bezeichnen;
wobei die Vergleichmittel (13, 23) einen Schreibentscheidungs-Bezeichnungssignalgenerator (13, 23) aufweisen, um die einander gegenüberliegenden Enden des Schreibsperrbereiches in dem Anzeigespeicher zu bestimmen, um vier unterschiedliche Zustände der Adresse zu definieren, einen Zustand der Adresse in welchem alle Bits in dem Schreibzulässigkeitsbereich sind, einem Zustand der Adresse, in welchem vorbestimmte obere Bits in dem Schreibzulässigkeitsbereich und vorbestimmte untere Bits in dem Schreibsperrbereich sind, einem Zustand der Adresse, in welchem alle Bits in dem Schreibsperrbereich sind und einem Zustand der Adresse, in welchem vorbestimmte obere Bits in dem Schreibsperrbereich und vorbestimmte untere Bits in dem Schreibzulässigkeitsbereich sind, wobei der Zustand der Adresse in einem der vier Adressenzustände bestimmt wird, die den zugeführten Adressdaten entsprechen und Erzeugen eines Schreibzulässigkeitssignals und eines Schreibsperrsignals mit Bezug auf die Biteinheit entsprechend der zugeführten Adressdaten; und
die Untersagungsmittel (14) eine Schreibsteuerungseinheit aufweisen, um nur zulässige Bits der Schreibdaten in den Anzeigespeicher (10) in Übereinstimmung mit dem Schreibzulässigkeitssignal und dem Schreibsperrsignal, die von dem Schreibentscheidungs-/Bezeichnungssignalgenerator zugeführt werden unter Bezugnahme auf die Biteinheit entsprechend der zugeführten Adressdaten, einzuschreiben.

3. Speichersteuerungssystem nach Anspruch 2, wobei:
das erste Haltemittel (21) ein zweites Anzeigedatenspeicherbereichs-Bezeichnungsregister (21b) aufweist, um die Breite in der Y-Richtung der Anzeigedaten, die in dem Anzeigespeicher (10) gespeichert werden, in Antwort auf das Anzeigebit mit den Bezeichnungsdaten, zu bezeichnen.

## Revendications

1. Système de commande de mémorisation pour une mémoire d'affichage (10) ayant un tableau d'éléments de mémoire et une unité d'accès à la mémoire pour accéder à la mémoire d'affichage (10) en unités ayant chacune une largeur d'un nombre prédéterminé de bits, un tel nombre de bits étant supérieur à un, **caractérisé en ce que** :
ledit système de commande de mémorisation comporte :
des premiers moyens de maintien (11, 21) pour maintenir des données désignant une zone de mémorisation de données d'affichage de la mémoire d'affichage (10) où des données sont mémorisées,
des seconds moyens de maintien (12) pour maintenir des données désignant la largeur d'une zone d'interdiction d'écriture de la mémoire dont le contenu est masqué et non réinscriptible, ces seconds moyens de maintien étant conçus pour désigner ladite largeur en termes de nombre de bits sans tenir compte de si une limite de cette zone d'interdiction d'écriture coïncide avec une frontière d'unité de mémoire ou non,
des moyens de comparaison (13, 23) pour comparer une adresse de mémoire délivrée et des données desdits premiers et seconds moyens de maintien, et
des moyens d'interdiction (14) pour interdire l'écriture de données dans un élément de mémoire de la zone d'interdiction d'écriture lorsque le résultat de la comparaison dans les moyens de comparaison (13, 23) indique qu'au moins une partie de la zone d'interdiction d'écriture est contenue dans la largeur binaire de l'unité désignée par l'adresse de mémoire délivrée.

2. Système de commande de mémorisation selon la revendication 1, conçu pour écrire des données dans une zone d'autorisation d'écriture, cette zone d'autorisation d'écriture étant la partie de la zone de mémorisation de données d'affichage autre que la zone d'interdiction d'écriture, et pour lire des données à partir de la mémoire d'affichage (10) en réponse à une adresse délivrée depuis l'extérieur, dans lequel :
lesdits premiers moyens de maintien (11, 21) comportent un premier registre de désignation de zone de mémorisation de données d'affichage (21a) conçu pour désigner la largeur de données d'affichage mémorisées dans la mémoire d'affichage (10), en réponse à des données de désignation de largeur binaire d'affichage,
lesdits seconds moyens de maintien (12) comportent un registre de désignation de largeur binaire de masque conçu pour désigner la largeur des données à masquer, c'est-à-dire des données qui ne sont pas réécrites dans la largeur des données d'affichage désignées par le premier registre de désignation de zone de mémorisation de données d'affichage, en réponse à des données de désignation de largeur binaire de masque,
ledit premier registre de désignation de zone de mémorisation de données d'affichage et ledit registre de désignation de largeur binaire de masque (12) désignant des largeurs dans la direction X en termes de nombre de bits sur la carte de la mémoire d'affichage (10),
lesdits moyens de comparaison (13, 23) comportent un générateur de signal de détermination/désignation d'écriture (13, 23) pour déterminer les extrémités opposées de la zone d'interdiction d'écriture dans la mémoire d'affichage pour définir quatre états d'adresse différents, un état d'adresse dans lequel tous les bits sont dans la zone d'autorisation d'écriture, un état d'adresse dans lequel des bits supérieurs prédéterminés sont dans la zone d'autorisation d'écriture et des bits inférieurs prédéterminés dans la zone d'interdiction d'écriture, un état d'adresse dans lequel tous les bits sont dans la zone d'interdiction d'écriture, et un état d'adresse dans lequel des bits supérieurs prédéterminés sont dans la zone d'interdiction d'écriture et des bits inférieurs prédéterminés sont dans la zone d'autorisation d'écriture, déterminer l'état d'adresse dans l'un des quatre états d'adresse qui correspond à des données d'adresse délivrées, et générer un signal d'autorisation d'écriture et un signal d'interdiction d'écriture se rapportant à une unité binaire correspondant aux données d'adresse délivrées, et
lesdits moyens d'interdiction (14) comportent une unité de commande d'écriture pour écrire uniquement des bits autorisés des données d'écriture dans la mémoire d'affichage (10) conformément au signal d'autorisation d'écriture et au signal d'interdiction d'écriture délivrés par le générateur de signal de détermination/désignation d'écriture se rapportant à l'unité binaire correspondant aux données d'adresse délivrées.

3. Système de commande de mémorisation selon la revendication 2, dans lequel :
lesdits premiers moyens de maintien (21) comportent un second registre de désignation de zone de mémorisation de données d'affichage (21 b) pour désigner la largeur dans la direction Y de données d'affichage mémorisées dans la mémoire d'affichage (10), en réponse à des données de désignation de largeur binaire d'affichage.
